# EUROPEAN PATENT APPLICATION

(11) **EP 2 743 449 A2**
(43) Date of publication of application: **18.06.2014**
(21) Application number: 13185459.8
(22) Date of filing: 20.09.2013
(51) Int. Cl.: F01D 5/04

(54) **Impeller backface rotating heat shield**

(30) Priority: 12.12.2012 US 201213711703
(71) Applicant: Honeywell International Inc., Morristown, NJ 07962-2245 (US)
(72) Inventor: Hanley, David, Morristown, NJ New Jersey 07962-2245 (US); Chunduru, Srinivas Jaya, Morristown, NJ New Jersey 07962-2245 (US); Mcnamee, Dawn Kimberly, Morristown, NJ New Jersey 07962-2245 (US); Phataraphruk, Prapoj, Morristown, NJ New Jersey 07962-2245 (US); Waldman, David Ross, Morristown, NJ New Jersey 07962-2245 (US)
(74) Representative: Houghton, Mark Phillip

(57) **Abstract**

A gas turbine engine, a rotor assembly for a gas turbine engine, and a method for thermally insulating an impeller in a gas turbine engine are provided. In one embodiment, the gas turbine engine includes an impeller having a front face configured to modify a direction of air flow through the gas turbine engine. The impeller further includes backface to which a heat shield is mounted. A closed cavity is defined between the heat shield and the backface of the impeller, and is configured to insulate the backface of the impeller from a high temperature environment.

## Description

This invention was made with Government support under contract number 7001073706-0010 DTFAWA-10-C-00040 awarded by the CLEEN program of the FAA. The Government has certain rights in this invention.

### TECHNICAL FIELD

Embodiments of the subject matter described herein relate generally to gas turbine engines. More particularly, embodiments of the subject matter relate to a method and impeller backface rotating heat shield for thermally insulating the backface of an impeller in a gas turbine engine.

### BACKGROUND

Gas turbine engines generally include an engine sub-assembly commonly referred to as the spool. The spool includes a shaft, a compressor including an impeller, and a turbine. The compressor and the turbine are mounted to the shaft and rotate together with the shaft.

Modern gas turbine engine high pressure ratio compressors produce high temperature operating environments for impellers. For example, typical compressor inlet temperatures are around 260°C (500°F) at the radial tip of the front face of the impeller. The temperature of the environment at impeller exit and behind the backface of the impeller is typically around 540°C (1000°F).

The high temperature environments produce large thermal gradients due to the flow path gas temperature, bore secondary flow, and viscous cavity convection heat transfer on the impeller backface. These thermal gradients produce greater thermal stress in the impeller. As a result, impellers in high temperature gas turbine operating environments suffer from the effects of higher thermal stress that are manifest in increased running clearances, increased creep deflection, and lower fatigue lives that collectively reduce engine performance and durability.

Hence, there is a need for a method and apparatus for thermally insulating impellers in gas turbine engines to reduce impeller backface heating. Reducing impeller backface heating reduces thermal stress to allow reduced running clearances, reduced creep deflection, and greater fatigue lives to improve engine performance and durability. Other desirable features and characteristics of the method and system will become apparent from the subsequent detailed description and the appended claims, taken in conjunction with the accompanying drawings and the preceding background.

### BRIEF SUMMARY

A gas turbine engine, a rotor assembly for a gas turbine engine, and a method of thermally insulating an impeller in a gas turbine engine are provided. In an exemplary embodiment, the gas turbine engine includes an impeller having a front face configured to modify a direction of air flow through the gas turbine engine. The impeller further includes backface to which a heat shield is mounted. A closed cavity is defined between the heat shield and the backface of the impeller. Further, the closed cavity is configured to insulate the backface of the impeller from a high temperature environment.

A rotor assembly for a gas turbine engine is also provided. The rotor assembly includes an annular rotor member having a backface. Further, the rotor assembly includes an annular seal plate mounted to the backface of the rotor member and enclosing an annular cavity between the seal plate and the rotor member, wherein the annular cavity is configured to thermally insulate the backface of the annular rotor member.

Also provided is a method for thermally insulating an impeller in a gas turbine engine. The method includes mounting a heat shield to a backface of the impeller and forming a closed cavity between the heat shield and the backface of the impeller. The closed cavity is configured to insulate the backface of the impeller from a high temperature environment.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures and wherein:

FIG. 1 is a simplified fragmentary cutaway view of a gas turbine engine illustrating a shaft, an impeller, and a turbine;

FIG. 2 is an expanded view of the impeller of FIG. 1 outfitted with a heat shield in accordance with an embodiment herein; and

FIG. 3 is an expanded view of the impeller of FIG. 1 outfitted with a heat shield in accordance with another embodiment herein.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The subject matter described herein relates to the thermal insulation of impellers in gas turbine engines. Thermal insulation is provided by forming a closed cavity along the backface of the impeller. The closed cavity may contain air or an insulation material. Thermally insulating the backface of the impeller reduces the thermal gradients experienced by the impeller.

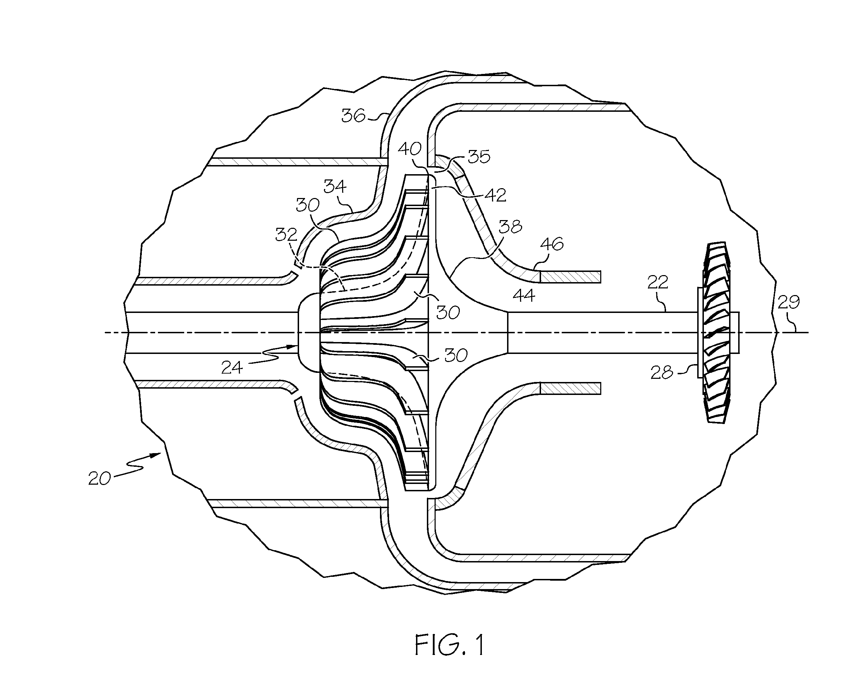

FIG. 1 is a simplified fragmentary cutaway view of a gas turbine engine 20 illustrating a shaft 22, an impeller 24, and a turbine 28. Shaft 22, impeller 24 and turbine 28 rotate about a longitudinal axis 29 indicated by the broken line running through the center of shaft 22. The rotation of these components (as well as others) causes air to flow (hereinafter, the "airflow") through gas turbine engine 20 from an inlet (not shown) at a forward portion of gas turbine engine 20 to an exhaust port (not shown) at a rear portion of gas turbine engine 20. As the airflow moves through gas turbine engine 20, it is first compressed in a compressor and then heated in a combustion chamber together with fuel causing its volume to rapidly expand, at which point it is exhausted out of the exhaust port.

Impeller 24 contributes to the movement of the airflow through gas turbine engine 20. Annular impeller 24 takes airflow that is moving in an axial direction and spins it rapidly, which together with the contour of impeller 24, changes the direction of the airflow's movement from axial to radial. Impeller 24 includes multiple impeller blades 30 extending longitudinally along an impeller front face or surface 32 and which are oriented generally transversely to impeller surface 32. Impeller blades 30 are configured and contoured to receive the axially flowing airflow and to redirect it so that it flows in a radial direction.

An impeller shroud 34 is statically mounted (i.e., it does not rotate together with shaft 22) to an internal portion of gas turbine engine 20. Impeller shroud 34 is positioned in a closely spaced apart relationship with an outer periphery of impeller blades 30. This closely spaced apart relationship inhibits air from bleeding off of the periphery of impeller blades 30 as impeller 24 rotates. In this manner, impeller shroud 34 cooperates with impeller 24 to confine the airflow to a path bounded on one side by impeller surface 32 and bounded on the other side, by impeller shroud 34. Conduits 36 are statically mounted to an internal portion of gas turbine engine 20 and are positioned to receive the airflow as it exits impeller 24. Conduits 36 convey the airflow from impeller 24 through combustor chamber to turbine 28. While a gap 35 is illustrated between impeller blades 30 and conduits 36, it should be understood that the gap 35 is exaggerated to assist the viewer in comprehending where impeller conduits 36 ends and where impeller blades 30 begin.

As shown, the impeller 24 includes a backface 38. Impeller backface 38 extends radially inwardly from a periphery 40 of impeller 24 towards shaft 22. Impeller backface 38 comprises a generally smooth surface having a gentle, curved contour that is substantially radially oriented at its axially forward end 42 and that is substantially axially oriented at its axially rear end 44.

As illustrated in FIG. 1, the entirety of the backface 38 of the impeller 24 from periphery 40 to rear end 44 may be contacted by any airflow passing through gap 35. The backface 38 of the impeller 24 is in contact with viscous heated cavity air caused by the rotating backface and the stationary static structure 46. Under typical operating conditions, the air in contact with backface 38 is at elevated temperatures, such as about 540°C (1000°F). Therefore, the backface 38 is heated and high thermal gradients are experienced by the impeller 24.

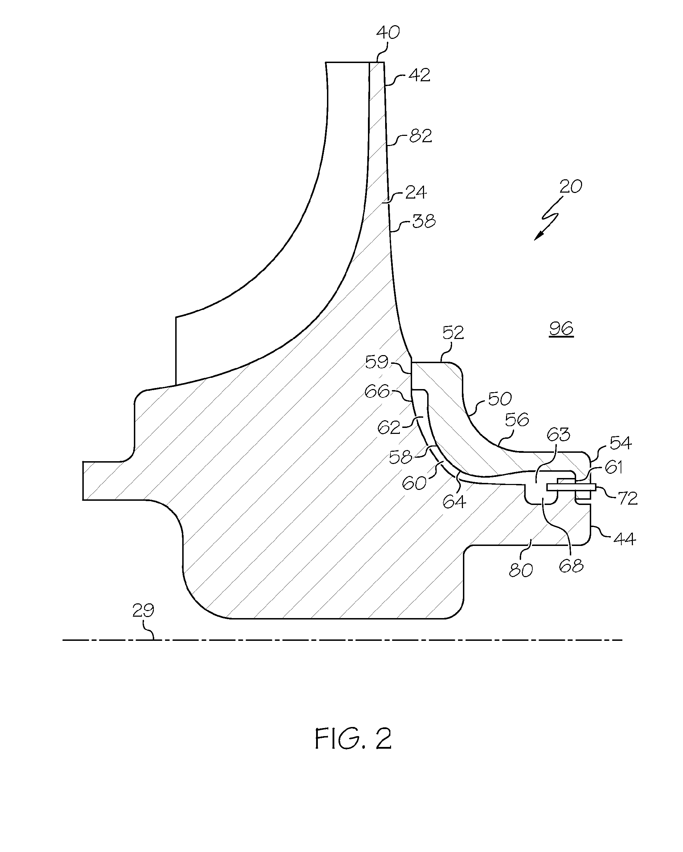

FIG. 2 illustrates an apparatus for thermally insulating the backface 38 of the impeller 24. As shown, the exemplary gas turbine engine 20 provides a heat shield or seal plate 50 mounted to the backface 38 of the impeller 24. The heat shield 50 may be formed from suitable material such as titanium, nickel, or stainless steel to withstand elevated temperatures and centrifugal stress. The heat shield 50 is in the shape of an annular sleeve member having a forward end 52 that extends radially outward and a rear end 54 that extends axially. The heat shield 50 includes a back or outer surface 56 that is a generally smooth and has a gentle, curved contour similar to and in line with the backface 38 of the impeller 24. Further, the heat shield 50 includes a front or inner surface 58. As the heat shield 50 is annular and centered about axis 29, the back surface 56 has a larger diameter than the front surface 58 at similar axially spaced locations along the heat shield 50.

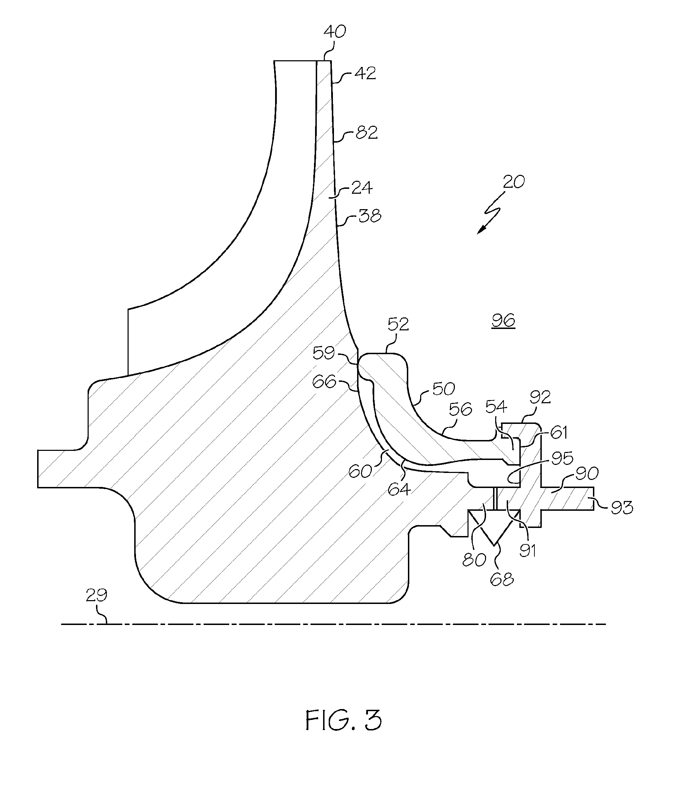

The forward end 52 of the heat shield 50 includes a surface 59 substantially perpendicular to the axis 29. Alternatively, the forward end 52 may be contoured as shown in Fig 3. The forward end 52 of the heat shield 50 may be mounted to the backface 38 of the impeller 24 via any connection sufficient to block air flow therebetween. In an exemplary embodiment, the forward end 52 of the heat shield 50 is axially pressed against the backface 38 of the impeller 24.

The rear end 54 of the heat shield 50 includes a substantially planar surface 61 perpendicular to the axis 29. The rear end 54 of the heat shield 50 may be mounted to the backface 38 of the impeller 24 via any connection sufficient to block air flow therebetween. As shown, the rear end 54 of the heat shield 50 is bolted to the impeller 24 by a bolt 72. In an exemplary embodiment, the rear end 54 of the heat shield 50 is piloted to the backface 38 of the impeller 24.

As shown, the heat shield 50 includes a shoulder 64 with a maximum cross-sectional thickness near its midpoint. The cross-sectional thickness of the heat shield 50 tapers from the shoulder 64 axially toward the rear end 54 and axially and radially toward the forward end 52. The cross-sectional thickness distribution, locating maximum thickness and contours of surfaces 56 and 58 are formed so the air in the cavity remains sealed during engine operation with no leakage.

In FIG. 2, an annular closed cavity 60 is formed and bounded by the backface 38 of the impeller 24 and the front surface 58 of the heat shield 50. As shown, no apertures or other flow paths into the closed cavity 60 are available for air flow passing through the gap 35 around the periphery 40 of the impeller 24. As a result, the closed cavity 60 provides a substantially sealed space which insulates the covered portion 66 of the impeller backface 38 from high temperature air flow adjacent to the back surface 56 of the heat shield 50.

The dimensions of the exemplary closed cavity 60 include a forward portion 62 extending radially and axially away from the shoulder 64 of the front surface 58 of the heat shield 50. The closed cavity 60 includes a rear portion 63 extending rearward from the shoulder 64 of the front surface 58 of the heat shield 50. In order to provide increased insulation of the impeller backface 38, insulation 68 may be positioned between the impeller backface 38 and the heat shield 50 during fabrication. With the insulation 68 encapsulated in the closed cavity 60, a wider range of insulations may be chosen for use. Specifically, because the insulation 68 is encapsulated, it need not have sufficient mechanical strength to withstand a high temperature, high speed rotating environment. Rather, as the insulation 68 is encapsulated, its mechanical strength is not important for use in the closed cavity 60, as it will remain positioned in the closed cavity 60 despite any mechanical breakdown. Materials used as insulation 68 may include suitable material such as ceramics or high temperature polymers capable of withstanding elevated temperatures. Further, while FIG. 2 illustrates all of closed cavity 60 being filled by insulation 68, it is contemplated that closed cavity 60 be filled selectively and partially with insulation 68.

In the exemplary embodiment of FIG. 2, the heat shield 50 covers substantially all of the axially-extending portion 80 of the impeller 24, while covering less than half of the radially-extending portion 82 of the impeller 24.

In FIG. 2, the heat shield 50 is mounted to the impeller 24 at both ends 52, 54 and the impeller 24 is mounted to a coupler which is connected to the shaft (not shown). FIG. 3 illustrates an alternative embodiment in which the rear end 54 of the heat shield 50 is mounted to the coupler 90. As a result, the closed cavity 60 is bounded by the heat shield 50, impeller 24, coupler 90 and V seal 88. In this embodiment, the forward end 52 of heat shield 50 is mounted to the impeller backface 38 at a contoured surface 59, the rear end 54 of heat shield 50 is mounted to the coupler 90 at surface 61, and the coupler 90 is mounted to the impeller 24 at the impeller rear end 44. As a result, the closed cavity 60 provides a substantially sealed space which insulates the covered portion 66 of the impeller backface 38 from high temperature air flow passing the back surface 56 of the heat shield 50. In FIG. 3, insulation 68 completely fills the closed cavity 60.

As shown in FIG. 3, the coupler 90 includes ends 91, 92, 93. End 91 is mounted to the impeller rear end 44 and end 92 is mounted to the rear end 54 of the heat shield 50. Between ends 91 and 92 is a surface 95 that bounds a portion of the closed cavity 60. End 93 may be mounted to the shaft (not shown).

FIGS. 2 and 3 illustrate a method for thermally insulating an impeller in a gas turbine engine 20. In the method, heat shield 50 is mounted to impeller backface 38 to form closed cavity 60 between heat shield 50 and impeller backface 38. The closed cavity 60 is configured to insulate the impeller backface 38 from a high temperature environment 96.

In FIG. 3, the method includes mounting the end 91 of coupler 90 to impeller 24, mounting the end 92 of coupler 90 to heat shield 50, and mounting the end 93 of coupler 90 to the shaft of the gas turbine engine 20. In this embodiment, surface 95 of coupler 90 bounds a portion of the closed cavity 60. In FIG. 2, the method includes mounting the end 52 of heat shield 50 to impeller backface 38 and mounting the end 54 of heat shield 50 to impeller backface 38 such that closed cavity 60 is fully bounded by the impeller backface 38 and the front surface 58 of heat shield 50.

As described above, mounting the heat shield 50 in either configuration forms the closed cavity 60 with an annular configuration and enables joint rotation of heat shield 50 and impeller 24 about gas turbine axis 29. Further, in either configuration the method may include encapsulating insulation 68 in the closed cavity 60.

As a result of the insulative effects of the closed cavity 60 created by mounting the heat shield 50 to the impeller 24 in the gas turbine engine 20, thermal gradients across the impeller 24 are reduced. Use of insulation 68 in the closed cavity may be used to further reduce thermal gradients across the impeller 24. Reduced thermal gradients and reduced thermal stress allows reduced running clearances, reduced creep deflection, and greater fatigue lives for impellers to improve engine performance and durability.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A gas turbine engine (20) comprising:
an impeller (24) having a front face (32) configured to modify a direction of air flow through the gas turbine engine and a backface (38); and
a heat shield (50) mounted to the backface of the impeller and defining a closed cavity (60) between the heat shield and the backface of the impeller, wherein the closed cavity is configured to insulate the backface of the impeller from a high temperature environment.

2. The gas turbine engine of claim 1 further comprising a coupler (90) having a first end (91) mounted to the impeller, a second end (92) mounted to the heat shield, and a third end mounted (93) to a tie shaft of the gas turbine engine, wherein the coupler bounds a portion of the closed cavity.

3. The gas turbine engine of claim 1 further comprising an insulating material (68) encapsulated in the closed cavity.

4. The gas turbine engine of claim 1 wherein the heat shield has an outer end (52) mounted to the backface of the impeller and an inner end (54) mounted to the backface of the impeller, and wherein the closed cavity is fully bounded by the backface of the impeller and the heat shield.

5. The gas turbine engine of claim 1 wherein the heat shield has an outer face (56) configured to direct air flow away from the impeller.

6. The gas turbine engine of claim 1 wherein the impeller and the heat shield are configured to rotate about an axis (29).

7. The gas turbine engine of claim 1 wherein the impeller and the heat shield define the closed cavity with an annular configuration, extending around an axis (29) of the gas turbine engine.

8. The gas turbine engine of claim 1 wherein the heat shield is mounted for joint rotation with the impeller about a gas turbine axis (29).

9. A method for thermally insulating an impeller (24) in a gas turbine engine (20) comprising:
mounting a heat shield (50) to a backface (38) of the impeller and forming a closed cavity (60) between the heat shield and the backface of the impeller, wherein the closed cavity is configured to insulate the backface of the impeller from a high temperature environment.

10. The method of claim 9 further comprising:
mounting a first end (91) of a coupler (90) to the impeller, a second end (92) of the coupler to the heat shield, and a third end (93) of the coupler to a tie shaft of the gas turbine engine, wherein the coupler bounds a portion of the closed cavity.
